# FASCICULE DE BREVET EUROPEEN

(11) **EP 0 419 338 B1**
(45) Date de publication et mention de la délivrance du brevet: **24.03.1993**
(21) Numéro de dépôt: 90402559.0
(22) Date de dépôt: 17.09.1990
(51) Int. Cl.: B64G 1/58, F02K 9/97

(54) **Revêtement de protection thermique, un procédé et une installation pour sa fabrication.**
Thermische Schutzschicht, Verfahren und Herstellungsanlage
Thermal protection skin, a method and a production installation

(30) Priorité: 19.09.1989 FR 8912283
(43) Date de publication de la demande: 27.03.1991
(73) Titulaire: AEROSPATIALE Société Nationale Industrielle, 75781 Paris Cédex 16 (FR)
(72) Inventeur: Hocquellet, Dominique, F-33160 Saint-Medard-en-Jalles (FR)
(74) Mandataire: Rinuy, Santarelli

(56) Documents cités:
- FR-A- 1 518 681
- FR-A- 2 166 542
- FR-A- 2 569 237
- GB-A- 2 191 115
- US-A- 3 140 968
- ARS JOURNAL. no. 32, février 1962, NEW YORK US page 221 R.T. SWANN: "Composite Thermal Protection Systems for Manned Re-Entry Vehicles"

## Description

L'invention concerne le secteur des matériaux de protection thermique destinés au revêtement d'objets devant subir pendant un temps relativement court un flux thermique très élevé tout en conservant de bonnes caractéristiques de tenue mécanique.

Elle vise un revêtement pour la protection thermique d'une surface, un procédé, notamment automatisé, pour le revêtement, de l'extérieur au moins, d'un corps de révolution (cylindre, cône ou autre) par une telle protection thermique, et une installation pour la mise en oeuvre de ce procédé.

Pour réaliser ce type de protection thermique on utilise habituellement des matériaux constitués d'un empilement ou d'un enroulement de couches de renfort textile (tresses, tissus découpés, rubans, franges, etc...) de silice, verre, carbone ou autre matière réfractaire, liées par un élastomère ou une résine (thermodurcissable ou thermoplastique).

La fonction d'isolation thermique est alors essentiellement assurée par le liant (ou matrice) tandis que la résistance mécanique est assurée par les couches de renfort textile qui ne se dégradent qu'à très haute températures mais qui, par contre, se révèlent meilleures conductrices de la chaleur que le liant. Lors d'une agression thermique, le liant est très vite détruit, alors que le renfort passe par une phase de ramollissement avant sa fusion complète.

Afin de conserver l'intégrité de la protection lors de l'agression thermique, il est indispensable qu'une partie du renfort textile soit ancrée dans une zone suffisamment froide du revêtement de protection thermique, évitant ainsi son délaminage ou déchaussement prématuré.

C'est pourquoi les couches sont en général perpendiculaires ou inclinées par rapport à la surface, et non parallèles à celle-ci.

Ces matériaux connus portent par exemple les noms de "CLINOSTRASIL" ou "ORTHOSTRASIL".

Ce type de matériau présente, dans certaines applications, un défaut rédhibitoire, à savoir une isolation thermique mal adaptée, dans le cas d'un flux moyen maintenu pendant un temps assez long (par exemple : 200 KW/m², 4 mn) perturbé par des pics très élevés pendant des temps très courts (par exemple 1 à 2 MW/m² pendant quelques secondes). Dans ce type de mission, les températures de surface obtenues lors des pics imposent un matériau résistant mécaniquement à ces températures, mais la durée de l'agression à moyen flux demande un matériau très isolant.

Les matériaux traditionnels (notamment les matériaux "CLINOSTRASIL" et "ORTHOSTRASIL" précités) se caractérisent par un taux de fibre très élevé (par définition, mais aussi par obligation imposée par les procédés de fabrication ainsi qu'on le verra plus loin). Ces matériaux sont donc trop bons conducteurs de la chaleur.

Afin d'améliorer les qualités d'isolation, les couches de renfort peuvent être inclinées, ce qui rallonge artificiellement le cheminement de la chaleur dans les fibres. Mais cette solution est limitée aux pièces cylindriques ou très peu tronconiques, car pour des angles de conicité assez élevés, les couches inclinées glissent lors de la fabrication.

Pour mettre en oeuvre de tels matériaux connus, on connaît divers procédés de fabrication.

Selon un premier procédé (on parle parfois de bobinage "CLINO" ou "ORTHO"), on bobine, couche contre couche, un tissu ou ruban pré-imprégné de résine thermodurcissable sur un mandrin ou directement sur l'objet à revêtir. L'angle d'inclinaison entre l'axe de révolution et les couches est donné au départ par une cale d'appui de la première couche. Après polymérisation, le revêtement est usiné à la bonne épaisseur.

Divers inconvénients sont associés à ce procédé :
- impossibilité de réaliser des matériaux à faible taux de renfort (et donc très isolants), car le contrôle de l'angle d'inclinaison lors du bobinage se fait par l'appui d'une couche sur l'autre. Si l'appui ne se faisait pas renfort sur renfort, il y aurait fluage du liant, ce qui entraînerait la perte de l'angle et, à court terme, le glissement des couches suivantes : on parvient ainsi à des propriétés d'isolation thermique parfois insuffisantes et irrégulières, en combinaison avec une mauvaise tenue à l'ablation due à une mauvaise localisation des renforts.
- a fortiori, impossibilité de réaliser des matériaux à base d'élastomères silicones vulcanisant à froid (RTV) ayant un assez faible taux de renfort. En effet, ce type de liant ne peut se mettre en oeuvre que par imprégnation directe. La fluidité du liant pose le même problème que ci-avant ;
- impossibilité de bobiner des corps à forte conicité car les couches de renfort glissent le long de la génératrice ;
- dans tous les cas, mauvais contrôle de la position des couches et de l'intervalle entre couche.

Selon un second procédé, on effectue un empilage de rondelles de tissu prédécoupées. Ce procédé très simple présente, bien souvent amplifiés, les mêmes défauts que précédemment avec, en outre :
- gaspillage de matière du fait de la découpe,
- procédé long.

Selon encore un autre procédé, on bobine sur un corps à protéger, un ruban frangé comportant des fibres porteuses longeant la surface à protéger, d'où partent de courtes fibres présentant une inclinaison appropriée.

Selon encore un autre procédé décrit dans le brevet FR-2.569.237, on bobine sur un mandrin intermédiaire ou sur le corps à protéger lui-même, un maillage frangé avec ceci de particulier que ce ruban frangé comporte une partie maillée directement soumise au flux thermique.

Ces solutions perfectionnées, malgré les avantages certains qu'elles apportent, présentent toutefois les mêmes inconvénients.

L'invention vise à pallier les inconvénients précités en proposant un revêtement de protection thermique présentant un compromis (isolation/tenue mécanique) bien plus conforme aux besoins réels que par le passé, c'est-à-dire bien plus isolant thermiquement que les revêtements connus à ce jour, répondant donc aux impératifs de tenue thermique et mécanique recherchés.

Elle vise en outre un procédé pour la fabrication à l'échelle industrielle d'un tel revêtement, et une installation adaptée à sa mise en oeuvre.

Elle propose ainsi un revêtement de protection thermique d'une surface à protéger, comportant un renfort noyé dans une matière thermiquement isolante, comportant une couche principale formée d'une succession de tranches de renfort fibreux réfractaire sensiblement parallèles et inclinées par rapport à la surface à protéger, entre lesquelles sont intercalées des tranches isolantes essentiellement constituées de ladite matière isolante, caractérisé en ce que cette couche principale est doublée d'au moins une sous-couche longeant la surface à protéger et essentiellement constituée d'une seconde matière isolante compatible avec ladite matière isolante.

Selon des dispositions préférées :
- les tranches de renfort représentent moins de 30 % en volume de la couche principale ;
- les tranches de renfort représentent entre 10 et 20 % en volume de la couche principale ;
- la sous-couche est en contact avec la surface à protéger ;
- le revêtement admet un axe de révolution et les tranches de renfort sont inclinées par rapport à cet axe selon un angle d'inclinaison, par définition inférieur ou égal à 90°, qui est inférieur à 60 ° ;
- l'angle d'inclinaison est compris entre 30° et 60° ;
- l'angle d'inclinaison est compris entre 40° et 50° ;
- le revêtement admet un axe de révolution et les tranches de renfort d'une part, et les tranches isolantes d'autre part, sont formées d'enroulements continus imbriqués ;
- les tranches de renfort comportent un ruban tissé en silice ;
- les tranches de renfort sont sensiblement équidistantes ;
- la matière isolante des tranches isolantes intercalées entre les tranches de renforts est un élastomère de référence d'un type silicone allégé ;
- la seconde matière isolante est identique à celle des tranches isolantes ;
- au moins la seconde matière isolante est un matériau dopé propre à permettre, par exemple, une protection contre les rayons X, tel que cela est décrit par le brevet FR-2.597.651 ;
- la seconde matière isolante est en un matériau alvéolaire ;
- l'épaisseur de la sous-couche est d'au moins de l'ordre du dixième de millimètre.

L'invention propose également un procédé de fabrication d'un revêtement de protection thermique d'une surface à protéger caractérisé en ce que :
- on dépose sur un support au moins une sous-couche en une matière thermiquement isolante destinée à être parallèle à la surface à protéger, et on la polymérise si nécessaire ;
- puis de façon continue en sorte de former progressivement une couche principale :
   * on usine dans cette sous-couche des sillons parallèles à profil constant ;
   * on place dans chaque sillon au moins une tranche de renfort fibreux réfractaire en sorte qu'un bord de celle-ci longe un flanc dudit sillon en s'engageant jusqu'au fond de celui-ci ;
   * on dépose le long de chaque tranche de renfort une tranche isolante en une première matière isolante comblant au moins le sillon ;
   * on calibre l'épaisseur de cette tranche parallèlement à la tranche de renfort associée ;
- et on fait polymériser ladite matière isolante.

Selon des dispositions préférées :
- on fait polymériser ladite matière isolante au fur et à mesure de son dépôt ;
- on usine l'ensemble sous-couche et couche ainsi obtenu en sorte d'en déterminer l'épaisseur perpendiculairement à la surface à protéger (cette épaisseur peut varier si nécessaire).
- dans le cas où la surface à protéger admet un axe de révolution, on usine autour de cet axe un sillon continu et, au fur et à mesure que ce sillon est usiné, en tout point de ce sillon et avant que celui-ci n'ait progressé de 360° à partir de ce point, on applique un ruban de renfort formant tranche de renfort, on étale un cordon de cette première matière isolante le long de ce ruban et on calibre l'épaisseur de la tranche isolante ainsi obtenue et on la fait polymériser ;
- le support est la surface à protéger ;
- le support est un mandrin intermédiaire.

L'invention propose également une installation pour la mise en oeuvre du procédé caractérisé en ce qu'il comporte :
- des moyens de dépôt pour le dépôt d'au moins une sous-couche isolante ;
- un outil de coupe adapté à tracer au moins un sillon dans la sous-couche ;
- un organe applicateur pour l'application d'au moins une tranche de renfort fibreux réfractaire dans chaque sillon, contre un flanc de celui-ci ;
- une buse d'injection pour le dépôt d'une couche de matière isolante le long de chaque tranche de renfort ;
- un outil de calibrage pour calibrer l'épaisseur de chaque tranche isolante ;
- un organe de polymérisation pour provoquer la polymérisation de la matière isolante ; et
- un outil d'usinage pour la mise du revêtement à un profil final prédéterminé.

De manière préférée :
- lesdits outils sont portés, en étant angulairement décalés, par au moins un porte-outil faisant partie d'une machine tournante telle qu'un tour à copier ou à commande numérique.
- à l'outil d'usinage est associé un système de copiage différent d'un premier système de copiage associé à l'outil de coupe, ce qui permet de faire varier à volonté l'épaisseur du revêtement. Le même résultat peut bien sûr être obtenu avec une machine à commande numérique.

Des objets, caractéristiques et avantages de l'invention ressortent de la description qui suit, donnée à titre d'exemple non limitatif, en regard des dessins annexés sur lesquels :
- la figure 1 est une vue en coupe d'un revêtement conforme à l'invention ;
- la figure 2 est une vue en coupe montrant la formation d'une sous-couche de ce revêtement ;
- la figure 3, est une vue en coupe montrant, dans une deuxième étape, le creusement d'un sillon ;
- la figure 4 est une vue en coupe montrant, dans une troisième étape, la dépose d'une tranche de renfort ;
- la figure 5, est une vue en coupe montrant, dans une quatrième étape, la formation d'une tranche isolante ;
- la figure 6, est une vue en coupe montrant, dans une cinquième étape, le calibrage de cette tranche isolante ; et,
- la figure 7 est une vue en bout d'une installation pour le dépôt d'un revêtement conforme à la figure 1 sur un corps ayant un axe de révolution.

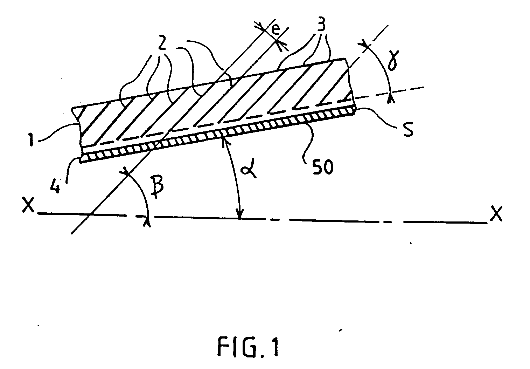

Le revêtement de la figure 1 comporte une couche principale 1 formée d'une succession de tranches de renfort fibreux réfractaire 2, sensiblement parallèles, ici équidistantes d'une distance e et inclinées selon une inclinaison γ par rapport à la surface S du corps 50 à protéger. Entre ces tranches de renfort, de préférence de renfort textile tissé ou frangé, sont intercalées des tranches thermiquement isolantes 3. Cette couche principale 1 est doublée d'une sous-couche isolante 4 parallèle à la surface S à protéger, ici en contact avec celle-ci. Cette surface a ici un axe X-X de révolution. Le corps a ici une conicité α tandis que l'inclinaison des tranches 2 par rapport à cet axe est β : on a donc γ = β-α.

Ce revêtement est donc constitué d'un renfort (par exemple un ruban tissé en silice) bobiné selon un certain angle et prenant en sandwich une matrice formant liant (par exemple en élastomère silicone), le tout étant lié à une sous-couche isolante.

Son principe est proche des matériaux de type "CLINOSTRASIL" décrits précédemment ; cependant, il s'en singularise par :
- un taux de renfort très faible (de préférence inférieur à 30 % en volume par rapport à la couche principale et plus particulièrement compris entre 10 et 20 %) ;
- une matrice très isolante (par exemple un élastomère siliconé allégé) déposée par imprégnation directe ;
- une forte inclinaison des tranches (angle β avantageusement compris entre 30 et 60°) ; on a pu constater que l'angle γ pouvait prendre une valeur très faible, pouvant descendre jusqu'à 10°, de sorte que cela correspond pour α à une gamme de 0 à 50°, de préférence de 20 à 50° ;
- une sous-couche en matrice pure.

Toutes ces caractéristiques garantissent de très bonnes qualités d'isolation thermique.

Selon une caractéristique essentielle de l'invention, il y a formation d'une sous-couche 4.

Cette sous-couche permet :
- l'ancrage des renforts textiles lors de la fabrication ;
- la liaison le plus souvent entre la surface S du corps à protéger et l'ensemble (1 + 4) du revêtement de protection thermique ;
- l'amélioration des caractéristiques d'isolation thermique.

La sous-couche isolante 4 peut être réalisée dans la même matière que les tranches isolantes 3.

Dans certaines variantes de l'invention, cette sous-couche peut être réalisée en un matériau différent de celui de la matrice 4 de la couche principale 1 de protection thermique (à condition que ces matières soient compatibles) afin d'assurer d'autres fonctions, par exemple :
- "protection contre les rayons X",
- "super isolation" par matériau alvéolaire.

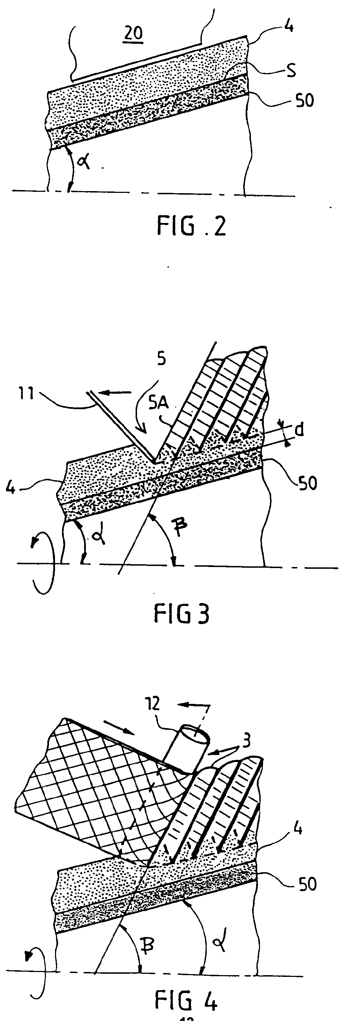

Diverses étapes du procédé sont décrites aux figures 2 à 6.

Conformément à la figure 2, la sous-couche 4 est formée directement sur la surface S du corps à protéger (après application d'un primaire d'adhérence) ou sur un mandrin (avec un démoulant), ici par moulage d'une couche en matériau identique ou non au matériau de la matrice grâce à un dispositif approprié de tout type connu schématisé en 20. L'épaisseur doit être légèrement supérieure à l'épaisseur finale de sous-couche souhaitée.

La couche principale 1 est ensuite formée par ce que l'on peut appeler bobinage insertion.

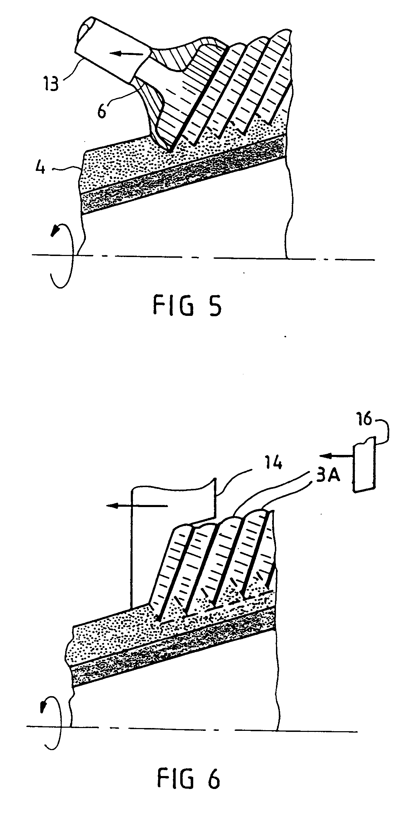

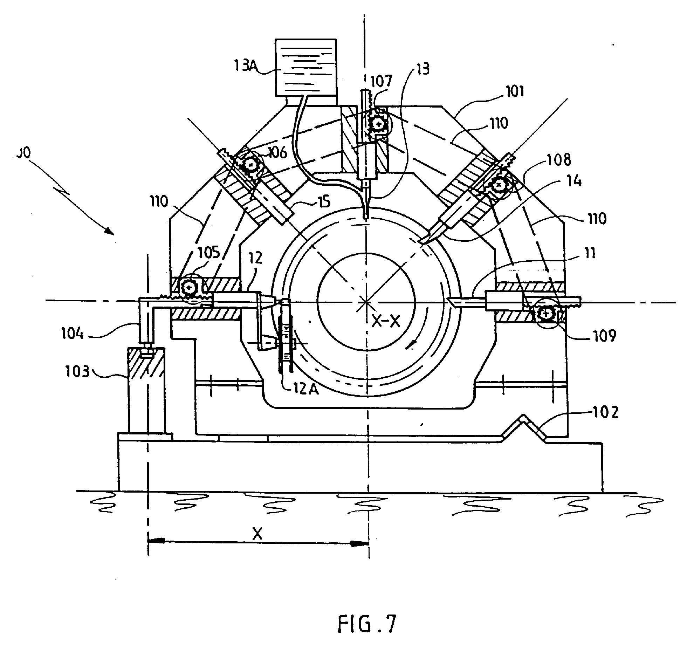

Après polymérisation de la sous-couche 4, on réalise de façon continue en sorte de former progressivement la couche principale, par exemple sur une machine tournante 10 spécialement aménagée (voir la figure 7), les opérations suivantes (en partant du plus grand diamètre s'il s'agit d'une forme conique et d'un angle β < 90°) :
- usinage autour de l'axe X-X d'un sillon continu 5 selon le pas souhaité par un outil de coupe 11 (voir la figure 3). Ce sillon doit avoir l'un 5 A de ses flancs incliné à l'angle β. Le fond du sillon ; doit se situer à la distance d de la surface S du corps à protéger, correspondant à l'épaisseur de sous-couche voulue (valeur minimale : quelques dixièmes de millimètres),
- insertion et bobinage du renfort textile 3 en bande (il s'agit à la figure 4 d'un ruban tissé), dans le sillon, grâce à un rouleau applicateur 12, en positionnant une de ses bordures en fond de sillon le renfort doit être appliqué par un guide tel que 12 selon l'angle β et en appui sur la tranche isolante précédente 3′,
- dépose par une buse d'injection 13 dans le sillon 5 d'un cordon 6 de liant (matrice), préalablement (ou en continu) catalysé(voir la figure 5),
- à la figure 6, mise en oeuvre d'un outil 14 pour le calibrage du dépôt afin d'améliorer l'imprégnation du renfort par le liant et d'en éliminer les excès.

On procède ensuite à une polymérisation de la couche principale 1 et avantageusement à un usinage à la cote et au profil voulus par un outil connu schématisé en 16 à la figure 6.

Il est à noter que pour améliorer la qualité de la dépose, il est avantageux de disposer d'un renfort textile déformable (surtout pour les petits diamètres).

L'efficacité de ce procédé provient du fait que le sillon permet un ancrage parfait du renfort textile 3, qui vient se mettre exactement à l'endroit voulu et empêche tout glissement, quelque soit l'angle de conicité α du corps 50 et l'angle du renfort β ; comme on l'a vu l'angle γ peut descendre à 10°. De plus, le côté usiné selon l'angle β aide au maintien de l'inclinaison donnée initialement par une cale d'appui. Enfin, la présence du sillon facilite la dépose contrôlée du liant et limite les coulures.

Ce procédé permet donc de fabriquer très rapidement et de manière automatique un revêtement du type de la figure 1 avec une très grande précision sur :
- le taux de renfort (lié au pas de bobinage),
- l'angle d'inclinaison des couches β, quel que soit le profil du corps de révolution à revêtir.

La figure 7 décrit schématiquement une machine permettant la mise en oeuvre du procédé, dans le cas des figures 2 à 6 où le corps 50, dont on veut protéger la surface S, admet un axe de révolution X-X.

En fait, sur ces figures 2 à 6, sont figurés par des flèches les mouvements relatifs entre le corps 50 et les divers outils : à la fois à un mouvement axial d'avance et un mouvement de rotation, ce qui correspond à un mouvement relatif globalement hélicoïdal.

Il est à noter toutefois que, dans son principe, le procédé des figures 2 à 6 ne se limite pas aux corps à axe de révolution. Dans son principe en effet, l'invention enseigne de protéger une portion de surface grâce à la formation de plusieurs tronçons parallèles de sillons. Il pourrait de même y avoir une pluralité de sillons continus imbriqués de rayons variant en fonction de la forme du corps à protéger.

Compte tenu du mouvement relatif globalement hélicoïdal de chacun des outils 11 à 14 vis à vis de ce corps, l'invention enseigne, à la figure 7, de rendre ces outils angulairement solidaires les uns des autres.

Il s'agit ici d'une machine tournante 100 (tour à copier modifié) dotée d'un chariot spécifique 101, porteur des fonctions usinage, bobinage, imprégnation et calibrage, tandis que le corps 50 à protéger est entraîné en rotation sans translation.

Les quatre fonctions portées par le chariot suivent la génératrice de la pièce à revêtir par un système d'avance radiale synchronisé avec le copieur de profil du tour.

Plus précisément ainsi qu'il ressort de la figure 7, le tour 100 comporte au moins une lunette porte-outil 101 portant les outils 11 à 14 décalés angulairement. Ce porte-outil 101 est mobile en translation le long d'un rail 102.

Auprès de l'outil applicateur 12 est prévue une bobine 12A de ruban de renfort, tandis qu'auprès de la buse d'injection 13 est prévu un bac 13A de réserve de liant.

Sur ce porte-outil est en outre prévu ici un outil de polymérisation 15, ici un outil irradiant angulairement disposé entre les outils 12 et 13, pour la polymérisation du liant. On pourrait de même prévoir sur ce même porte-outil 101 un outil d'usinage périphérique pour le lissage éventuel des bourrelets 3A de la figure 6.

Sur ce tour à copier est prévue une rainure de copiage 103 suivie par un galet porté par un bras coudé 104 portant l'un des outils, ici l'outil 12 d'application du renfort 2. Ce bras 104 est mobile radialement par rapport à la lunette porte-outil 101 et engrène avec un pignon 105. Les autres outils sont également solidaires de bras mobiles radialement et engrènent avec des pignons 106 à 109 semblables synchronisés en rotation par des chaînes 110.

On appréciera que la conception de la machine correspond à un tour à copier corrélant le rayon local r du corps à protéger à la distance X de la rainure de copiage 103 à l'axe de révolution X-X.

En variante non représentée l'outil de polymérisation 15 et l'outil d'usinage final peuvent être montés sur un second porte-outil suivant le premier porte-outil, en sorte d'intervenir avec plusieurs pas de décalage arrière.

L'outil d'usinage final pourrait également être fixé sur un porte-outil solidaire de la lunette mais asservi en position radiale à un copieur de forme différente du copieur de base (par exemple dans le cas où l'épaisseur du revêtement varie longitudinalement).

Le matériau a été obtenu au cours d'essais de réalisation selon le procédé décrit plus avant, avec un taux de renfort d'environ 15 % suivant un angle ß de 45°et un angle α variant de 10 à 20° ; la sous-couche avait une épaisseur d'environ 1 mm. pour une épaisseur totale variant continuement entre 4 et 8 mm.

Il va de soi que la description qui précède n'a été proposée qu'à titre d'exemple non limitatif et que de nombreuses variantes peuvent être proposées par l'homme de l'art sans sortir du cadre de l'invention comme défini dans les revendications.

## Revendications

1. Revêtement pour la protection thermique d'une surface (S) à protéger, comportant un renfort noyé dans une matière thermiquement isolante, comportant une couche principale (1) formée d'une succession de tranches de renfort fibreux réfractaire (2) sensiblement parallèles et inclinées par rapport à la surface à protéger, entre lesquelles sont intercalées des tranches isolantes (3) essentiellement constituées de ladite matière isolante, caractérisé en ce que cette couche principale est doublée d'au moins une sous-couche (4) longeant la surface à protéger et essentiellement constituée d'une seconde matière isolante compatible avec ladite matière isolante.

2. Revêtement selon la revendication 1, caractérisé en ce que les tranches de renfort représentent moins de 30 % en volume de la couche principale.

3. Revêtement selon la revendication 2, caractérisé en ce que les tranches de renfort représentent entre 10 et 20 % en volume de la couche principale.

4. Revêtement selon la revendications 1 ou la revendication 3, caractérisé en ce que la sous-couche (4) est en contact avec la surface (S) à protéger.

5. Revêtement selon la revendication 1 ou la revendication 4, caractérisé en ce qu'il admet un axe de révolution (X-X) et les tranches de renfort (2) sont inclinées par rapport à cet axe selon un angle d'inclinaison inférieur à 60°.

6. Revêtement selon la revendication 5, caractérisé en ce que l'angle d'inclinaison est compris entre 30° et 60°.

7. Revêtement selon la revendication 6, caractérisé en ce que l'angle d'inclinaison est compris entre 40° et 50°.

8. Revêtement selon l'une quelconque des revendications 1 à 7, caractérisé en ce qu'il admet un axe de révolution et en ce que les tranches de renfort (2) d'une part, et les tranches isolantes (3) d'autre part, sont formées d'enroulements continus imbriqués.

9. Revêtement selon l'une quelconque des revendications 1 à 8, caractérisé en ce que les tranches de renfort comportent un ruban tissé en silice.

10. Revêtement selon les revendications 1 à 9, caractérisé en ce que les tranches de renfort (2) sont sensiblement équidistantes.

11. Revêtement selon l'une quelconque des revendications 1 à 10, caractérisé en ce que la matière isolante des tranches isolantes intercalées entre les tranches de renforts est un élastomère silicone allégé.

12. Revêtement selon l'une quelconque des revendications 1 à 11, caractérisé en ce que la seconde matière isolante est identique à celle des tranches isolantes.

13. Revêtement selon l'une quelconque des revendications 1 à 11, caractérisé en ce que la seconde matière isolante est un matériau dopé.

14. Revêtement selon l'une quelconque des revendications 1 à 12, caractérisé en ce que la seconde matière isolante est en un matériau alvéolaire.

15. Revêtement selon l'une quelconque des revendications 1 à 14, caractérisé en ce que l'épaisseur de la sous-couche est d'au moins de l'ordre du dixième de millimètre.

16. Procédé de fabrication d'un revêtement de protection thermique d'une surface, à protéger selon l'une quelconque des revendications 1 à 15, caractérisé en ce que :
- on dépose sur un support (S) une sous-couche (4) en une matière thermiquement isolante destinée à être parallèle à la surface à protéger ;
- puis de façon continue en sorte de former progressivement une couche principale (1) :
* on usine dans cette sous-couche des sillons (5) parallèles à profils constants et identiques ;
* on place dans chaque sillon au moins une tranche de renfort fibreux réfractaire (2) en sorte qu'un bord de celle-ci longe un flanc dudit sillon en s'engageant jusqu'au fond de celui-ci ;
* on dépose le long de chaque tranche de renfort une tranche isolante en une première matière isolante comblant au moins le sillon ;
* on calibre l'épaisseur de cette tranche parallèlement à la tranche de renfort associée ;
- et on fait polymériser ladite matière isolante.

17. Procédé selon la revendication 16, caractérisé en ce qu'on fait polymériser ladite matière isolante au fur et à mesure de son dépôt.

18. Procédé selon la revendication 16 ou la revendication 17, caractérisé en ce qu'on usine l'ensemble sous-couche et couche ainsi obtenu en sorte d'en déterminer l'épaisseur perpendiculairement à la surface à protéger.

19. Procédé selon l'une quelconque des revendications 16 à 18, caractérisé en ce que, la surface à protéger admettant un axe de révolution, on usine autour de cet axe un sillon continu et, au fur et à mesure que ce sillon est usiné, on applique un ruban de renfort formant tranche de renfort, on étale un cordon de cette première matière isolante le long de ce ruban, on calibre l'épaisseur de la tranche isolante ainsi obtenue et on la fait polymériser.

20. Procédé selon l'une quelconque des revendications 16 à 19, caractérisé en ce que le support est la surface à protéger.

21. Procédé selon l'une quelconque des revendications 16 à 19, caractérisé en ce que le support est un mandrin intermédiaire.

22. Installation adaptée à la mise en oeuvre du procédé des revendications 16 à 21, caractérisé en ce qu'il comporte :
- des moyens de dépôt (20) pour le dépôt d'au moins une sous-couche isolante (4) ;
- un outil de coupe (11) adapté à tracer au moins un sillon (5) dans la sous- couche (4) ;
- un organe applicateur (12) pour l'application d'une tranche de renfort fibreux réfractaire dans chaque sillon, contre un flanc (5A) de celui-ci ;
- une buse d'injection (13) pour le dépôt d'une couche de matière isolante le long de chaque tranche de renfort ;
- un outil de calibrage (14) pour calibrer l'épaisseur de chaque tranche isolante ;
- un organe de polymérisation (15) pour provoquer la polymérisation de la matière isolante.

23. Installation selon la revendication 22, caractérisée en ce que lesdits outils sont portés, en étant angulairement décalés, par au moins un porte-outil (101) faisant partie d'une machine tournante.

24. Installation selon la revendication 22 ou la revendication 23, caractérisée en ce qu'il comporte un outil d'usinage (16) pour la mise du revêtement à un profil final prédéterminé.

25. Installation selon la revendication 24, caractérisée en ce que, à l'outil d'usinage est associé un système de copiage différent d'un premier système de copiage (103 - 104, 105 - 109, 110) associé à l'outil de coupe, l'organe applicateur, la buse d'injection et l'outil de calibrage.

26. Installation selon la revendication 23 ou la revendication 24, caractérisée en ce que la machine tournante est une machine à commande numérique.

## Patentansprüche

1. Schicht zum thermischen Schutz einer zu schützenden Oberfläche (S), die eine in einem thermisch isolierenden Material eingebettete Verstärkung und eine Hauptschicht (1) umfaßt, die von einer Folge von faserigen hitzebeständigen Verstärkungsstreifen (2) gebildet ist, welche im wesentlichen parallel und in Bezug auf die zu schützende Oberfläche geneigt sind und zwischen welchen im wesentlichen aus diesem isolierenden Material gebildete Isolierstreifen (3) eingebracht sind, **dadurch gekennzeichnet,** daß diese Hauptschicht rückseitig von wenigstens einer Zwischenschicht (4) verstärkt ist, welche sich längs der zu schützenden Oberfläche erstreckt und im wesentlichen von einem zweiten isolierenden, mit diesem isolierenden Material verträglichen Material gebildet ist.

2. Schicht nach Anspruch 1, dadurch gekennzeichnet, daß die Verstärkungsstreifen weniger als 30 Vol.-% der Hauptschicht ausmachen.

3. Schicht nach Anspruch 2, dadurch gekennzeichnet, daß die Verstärkungsstreifen zwischen 10 und 20 Vol.-% der Hauptschicht ausmachen.

4. Schicht nach Anspruch 1 oder 3, dadurch gekennzeichnet, daß die Zwischenschicht (4) mit der zu schützenden Oberfläche (S) in Kontakt ist.

5. Schicht nach Anspruch 1 oder 4, dadurch gekennzeichnet, daß sie eine Drehachse (X-X) aufnimmt und die Verstärkungsstreifen (2) in Bezug auf diese Achse gemäß einem Neigungswinkel kleiner 60° geneigt sind.

6. Schicht nach Anspruch 5, dadurch gekennzeichnet, daß der Neigunswinkel zwischen 30° und 60° liegt.

7. Schicht nach Anspruch 6, dadurch gekennzeichnet, daß der Neigunswinkel zwischen 40° und 50° liegt.

8. Schicht nach einem der Ansprüche 1 bis 7, dadurch gekennzeichnet, daß sie eine Drehachse aufnimmt und daß die Verstärkungsstreifen (2) einerseits und die Isolierstreifen (3) andererseits sind als fortsetzend überlappende Wicklungen ausgebildet sind.

9. Schicht nach einem der Ansprüche 1 bis 8, dadurch gekennzeichnet, daß die Verstärkungsstreifen eine Webband aus Kieselerde umfassen.

10. Schicht nach einem der Ansprüche 1 bis 9, dadurch gekennzeichnet, daß die Verstärkungsstreifen (2) im wesentlichen gleich beabstandet sind.

11. Schicht nach einem der Ansprüche 1 bis 10, dadurch gekennzeichnet, daß das isolierende Material der zwischen die Verstärkungsstreifen eingebrachten Isolierstreifen ein leichter gemachtes Silikonelastomer ist.

12. Schicht nach einem der Ansprüche 1 bis 11, dadurch gekennzeichnet, daß das zweite isolierende Material zu demjenigen der Isolierstreifen identisch ist.

13. Schicht nach einem der Ansprüche 1 bis 11, dadurch gekennzeichnet, daß das zweite isolierende Material ein gedoptes Material ist.

14. Schicht nach einem der Ansprüche 1 bis 12, dadurch gekennzeichnet, daß das zweite isolierende Material ein bienenwabenförmiges Material ist.

15. Schicht nach einem der Ansprüche 1 bis 14, dadurch gekennzeichnet, daß die Dicke der Zwischenschicht wenigstens im Zehntel-Millimeter-Bereich liegt.

16. Verfahren zur Herstellung einer Schicht zum thermischen Schutz einer zu'schützenden Oberfläche nach einem der Ansprüche 1 bis 15, dadurch gekennzeichnet, daß
- man auf eine Auflage (S) eine Zwischenschicht (4) aus einem thermisch isolierenden Material aufbringt, die bestimmt ist, zu der zu schützenden Oberfläche parallel zu sein;
- man dann derart fortfährt, um zunehmend eine Hauptschicht (1) zu bilden:
* man arbeitet in diese Zwischenschicht parallele Rillen (5) mit konstanten und identischen Profilen ein;
* man ordnet in jeder Rille wenigstens einen faserigen hitzebeständigen Verstärkungsstreifen (2) derart an, daß sich ein Rand dessen längs einer Flanke dieser Rille bis zum Grund dieser einnehmend erstreckt;
* man bringt längs jeden Verstärkungsstreifens einen Isolierstreifen aus einem ersten isolierenden Material auf, das wenigstens die Rille ausfüllt;
* man bringt die Dicke dieses parallel mit dem Verstärkungsstreifen verbundenen Streifens auf genaues Maß;
- und läßt man dieses isolierende Material polymerisieren.

17. Verfahren nach Anspruch 16, dadurch gekennzeichnet, daß man dieses isolierende Material entsprechend seiner Aufbringung polymerisieren läßt.

18. Verfahren nach Anspruch 16 oder 17, dadurch gekennzeichnet, daß man die Gesamtheit Zwischenschicht und so erhaltene Schicht derart durch Bestimmen der Dicke senkrecht zu der zu schützenden Oberfläche herstellt.

19. Verfahren nach einem der Ansprüche 16 bis 18, dadurch gekennzeichnet, daß die zu schützende Oberfläche eine Drehachse aufnimmt, um welche man eine fortschreitende Rille einarbeitet und, im gleichen Maße wie diese Rille hergestellt ist, man ein einen Verstärkungsstreifen bildendes Verstärkungsband anlegt, man einen Wulst dieses ersten isolierenden Materials längs dieses Bandes aufträgt, man die Dicke des so erhaltenen Isolierstreifens auf genaues Maß bringt und man diesen polymerisieren läßt.

20. Verfahren nach einem der Ansprüche 16 bis 19, dadurch gekennzeichnet, daß die Auflage die zu schützende Oberfläche ist.

21. Verfahren nach einem der Ansprüche 16 bis 19, dadurch gekennzeichnet, daß die Auflage ein Zwischenfutter ist.

22. Vorrichtung, die zur Durchführung des Verfahrens nach einem der Ansprüche 16 bis 21 geeignet ist, dadurch gekennzeichnet, daß sie umfaßt:
- Aufbringungseinrichtungen (20) zur Aufbringung wenigstens einer isolierenden Zwischenschicht (4);
- ein Schneidwerkzeug (11), das geeignet ist, wenigstens eine Rille (5) in die Zwischenschicht (4) zu ziehen;
- eine Auftragungseinrichtung (12) zur Auftragung eines faserigen hitzebeständigen Verstärkungsstreifens in jede Rille gegen eine Flanke (5A) von dieser;
- eine Spritzdüse (13) zur Aufbringung einer Schicht isolierenden Materials längs jeden Verstärkungsstreifens;
- ein Aufmaßbringungswerkzeug (14) zum Aufmaßbringen der Dicke jedes Isolierstreifens;
- eine Polymerisationseinrichtung (15) zum Einleiten der Polymerisation des isolierenden Materials.

23. Vorrichtung nach Anspruch 22, dadurch gekennzeichnet, daß diese Werkzeuge bzw. Einrichtungen von wenigstens einem Halter (101), welcher einen Teil einer umlaufenden Maschine bildet, winklig abgesetzt aufgenommen sind.

24. Vorrichtung nach Anspruch 22 oder 23, dadurch gekennzeichnet, daß sie ein Bearbeitungswerkzeug (16) zum Versehen der Schicht mit einem vorbestimmten Endprofil umfaßt.

25. Vorrichtung nach Anspruch 24, dadurch gekennzeichnet, daß dem Bearbeitungswerkzeug eine Kopiereinrichtung verschieden von einer ersten mit dem Schneidwerkzeug, der Auftragungseinrichtung, der Spritzdüse und dem Aufmaßbringungswerkzeug verbundenen Kopiereinrichtung (103 -104, 105 - 109, 110) zugeordnet ist.

26. Vorrichtung nach Anspruch 23 oder 24, dadurch gekennzeichnet, daß die umlaufende Maschine eine numerisch gesteuerte Maschine ist.

## Claims

1. A thermal protection coating for a surface (S) to be protected comprising a reinforcement embedded in a first thermally insulative material and including a main layer (1) formed from a succession of substantially parallel refractory fibrous reinforcement layers (2) inclined to the surface to be protected, between which are interleaved insulative layers (1) essentially made up of said first insulative material, characterised in that said main layer is lined with at least one sublayer (4) extending along the surface to be protected and essentially made of a second insulative material compatible with said first insulative material.

2. Coating according to claim 1 characterised in that the reinforcement layers represent less than 30% by volume of the main layer.

3. Coating according to claim 1 characterised in that the reinforcement layers represent between 10 and 20% by volume of the main layer.

4. Coating according to claim 1 or claim 3 characterised in that the sublayer (4) is in contact with the surface (S) to be protected.

5. Coating according to claim 1 or claim 4 characterised in that the coating has an axis (X-X) of revolution and the reinforcement layers (2) are inclined to this axis at an angle of inclination which is less than 60°.

6. Coating according to claim 5 characterised in that the angle of inclination is between 30° and 60°.

7. Coating according to claim 6 characterised in that the angle of inclination is between 40° and 50°.

8. Coating according to any one of claims 1 through 7 characterised in that it has an axis of revolution and the reinforcement layers (2) and the insulative layers (3) are formed by interleaved continuous windings.

9. Coating according to any one of claims 1 through 8 characterised in that the reinforcement layers comprise a woven silica tape.

10. Coating according to claims 1 through 9 characterised in that the reinforcement layers (2) are substantially equidistant.

11. Coating according to any one of claims 1 through 10 characterised in that the first insulative material of the insulative layers interleaved between the reinforcement layers is a lightened silicone type reference elastomer.

12. Coating according to any one claims 1 through 11 characterised in that the second insulative material is identical to that of the insulative layers.

13. Coating according to any one of claims 1 through 11 characterised in that at least the second insulative material is a doped material.

14. Coating according to any one of claims 1 through 12 characterised in that the second insulative material is a cellular material.

15. Coating according to any one of claims 1 through 14 characterised in that the thickness of the sublayer is at least in the order of one tenth of a millimetre.

16. A method of manufacturing a thermal protection coating for a surface to be protected according to any one of claims 1 through 15 and characterised in that:
- at least one sublayer (4) of a thermally insulative material adapted to be parallel to the surface to be protected is deposited onto a support (S);
- then, in a continuous manner so as to build up progressively a main layer (1);
* invariant and identical profile parallel grooves (5) are machined into said sublayer;
* at least one refractory fibrous reinforcement layer (2) is placed in each groove so that an edge portion thereof runs along a flank of said groove and is inserted thereinto as far its bottom;
* an insulative layer of a first insulative material is deposited along each reinforcement layer to fill at least the groove;
- the thickness of said insulative layer parallel to the associated reinforcement layer is formed to the required value; and
- said insulative material is polymerised.

17. Method according to claim 16 characterised in that said insulative material is polymerised as it is applied.

18. Method according to claim 16 or claim 17 characterised in that the combination of the sublayer and the main layer obtained in this way is machined to define its thickness perpendicular to the surface to be protected.

19. Method according to any one of claims 16 through 18 characterised in that if the surface to be protected has an axis of revolution, a continuous groove is machined around said axis and, as said groove is machined, there is applied to every point of said groove and before the latter has progressed 360° from said point, a reinforcement tape forming a reinforcement layer, a bead of said first insulative material is spread along said tape and the thickness of the insulative layer obtained in this way is formed to the required value and the material is polymerised.

20. Method according to any one of claims 16 through 19 characterised in that the support is the surface to be protected.

21. Method according to any one of claims 16 through 19 characterised in that the support is an intermediate former.

22. An installation for implementing the method according to any one of claims 16 through 21 and characterised in that it comprises:
- means (20) for depositing at least an insulative sublayer (4);
- a cutting tool (11) adapted to form at least one groove (5) in the sublayer (4);
- an applicator member (12) for applying at least one refractory fibrous reinforcement layer to each groove, against one flank (5A) thereof;
- an injection nozzle (15) for depositing a layer of insulative material along each reinforcement layer;
- a tool (14) for forming each insulative tranche to the required thickness;
- a polymerising member (15) for polymerising the insulative material.

23. Installation according to claim 22 characterised in that said tools are carried, angularly offset, by at least one tool-holder (101) which is part of a rotary machine.

24. Installation according to claim 22 or claim 23 characterised in that it comprises a machining tool (16) for forming the coating to a predetermined final profile.

25. Installation according to claim 24 characterised in that the machining tool is associated with a copying system different than a first copying system (103 - 104, 105 - 109, 110) associated with the cutting tool, the applicator member, the injection nozzle and the thickness determining tool.

26. Installation according to claim 23 or claim 24 characterised in that the rotary machine is a numerically controlled machine.
